(19) Europäisches Patentamt / European Patent Office / Office européen des brevets

(11) **EP 3 392 330 A1**

(12) **EUROPEAN PATENT APPLICATION**
published in accordance with Art. 153(4) EPC

(43) Date of publication:
**24.10.2018 Bulletin 2018/43**

(51) Int Cl.:
***C12C 1/02*** *(2006.01)*

(21) Application number: **16875729.2**

(22) Date of filing: **15.12.2016**

(86) International application number:
**PCT/JP2016/087403**

(87) International publication number:
**WO 2017/104752 (22.06.2017 Gazette 2017/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.12.2015 PCT/JP2015/085466**

(71) Applicant: **Suntory Holdings Limited Osaka-shi, Osaka 530-8203 (JP)**

(72) Inventor: **SAWADA, Masako Soraku-gun, Kyoto 619-0284 (JP)**

(74) Representative: **Vossius & Partner Patentanwälte Rechtsanwälte mbB Siebertstrasse 3 81675 München (DE)**

(54) **METHOD FOR PRODUCING ROOTING-SUPPRESSED MALT**

(57) A method for producing malts, including steeping barley in steeping water containing phosphoric acid, and a method for producing foodstuff (for example, a fermented beverage, a malts-applicable beverage, a beer-taste beverage, and whisky), including using malts prepared by the method as a raw material. According to the method of the present invention, rooting-suppressed malts can be efficiently produced, so that the productivity of malting (an yield of malting) can be improved. In addition, foodstuff using the malts obtained has an enhanced rich taste while suppressing acridity, so that the foodstuff can provide a new taste as luxury products.

FIG. 7

Graph showing the relationships between "pH" and "acrid component amount"

ACRID COMPONENT (Based on Normal Steeping Barley, % by weight) vs pH

EP 3 392 330 A1

**Description**

TECHNICAL FIELD

The present invention relates to a method for producing malts. More specifically, the present invention relates to a method for producing malts including steeping barley, and a method for producing foodstuff including using malts obtained by the method.

BACKGROUND ART

In general, in the production of beer, production areas, varieties, cultivation conditions and the like of barley are controlled such that the malts are produced so as to match the quality of beer to be produced accordingly. However, in order to produce beers having diversified tastes other than those currently available, methods for producing malts themselves have been intensively studied.

For example, Patent Publication 1 discloses that it is possible to increase a water absorption ratio and accelerate a water absorption speed of barley by subjecting barley to steeping process using ozone water, and also effects such as acceleration of germination speed or acrospires elongation speed even in a germination step after steeping are obtained.

Patent Publication 2 has reported that each of conditions are strictly defined such that the time of a first steeping is from 0.5 to 1.5 hours, the time of a first water cut-off that follows is from 16 to 19 hours, the temperature of germination is from 13° to 20°C, and steeping degree of malts after steeping is 40% or more, thereby controlling proteolysis ratio and cell walls-degradation ratio, whereby malts in which proteolysis ratio is controlled in a balance different from conventional products can be produced.

RELATED ART REFERENCES

PATENT PUBLICATIONS

Patent Publication 1: Japanese Patent Laid-Open No. Hei-5-328959
Patent Publication 2: Japanese Patent Laid-Open No. 2012-213373

SUMMARY OF THE INVENTION

PROBLEMS TO BE SOLVED BY THE INVENTION

However, when malts are produced in accordance with a conventional technique, rooting is found together with germination, and a root and acrospires contain an acridity-causing substance in themselves. Roots-removal reduces an yield of malts and also it is difficult to completely remove roots by the roots-removal step, so that foodstuff using the malts obtained have been unsatisfactory in a point that the foodstuff have a flavor such as unfavorable acridity. In view of the above, a malting technique without roots-removal has been desired.

An object of the present invention is to provide a method for efficiently producing germinated malts with suppressed-rooting (which are referred to as malts in the present invention), and a method for producing foodstuff using the malts obtainable by the method.

MEANS TO SOLVE THE PROBLEMS

The present invention relates to the following [1] to [11]:

[1] A method for producing malts, including steeping barley in steeping water having a pH of from 1.6 to 2.3 containing phosphoric acid.
[2] A method for producing foodstuff, including using malts prepared by a method as defined in the above [1] as a raw material.
[3] A method for producing a malt-applicable beverage, including using malts prepared by a method as defined in the above [1] as a raw material.
[4] A method for producing a beer-taste beverage, including using malts prepared by a method as defined in the above [1] as a raw material.

[5] A method for producing a fermented beverage, including using malts prepared by a method as defined in the above [1] as a raw material.

[6] A liquid for steeping containing phosphoric acid for suppressing rooting of malts.

[7] Use of steeping water containing phosphoric acid for suppressing rooting of malts.

[8] A method for suppressing rooting of malts, characterized by steeping raw material barley in steeping water containing phosphoric acid.

[9] Malts without rooting, wherein the malts are a steeping-processed product of raw material barley in steeping water containing phosphoric acid.

[10] Rooting-suppressed malts, wherein the malts are a steeping-processed product of raw material barley in steeping water containing phosphoric acid.

[11] Germination-suppressed malts, wherein the malts are a steeping-processed product of raw material barley in steeping water containing phosphoric acid.

EFFECTS OF THE INVENTION

According to the method for producing malts of the present invention, since rooting-suppressed malts can be efficiently produced, a roots-removal step can be simplified, and also an yield of malts can be remarkably improved. In addition, rooting-suppressed malts are obtained by the method of the present invention, and not only rooting but also elongation of acrospires is suppressed, so that foodstuff such as a fermented beverage obtained by using the malts can provide an excellent flavor in which acridity is suppressed.

In addition, the rooting-suppressed malts obtained by the method of the present invention exhibit excellent effects that since the malts have a high activity of an enzyme for degrading cell walls, for example, the β-glucan level in a raw material liquid is lowered during production of a fermented beverage and filtration properties in various filtration steps are improved, thereby improving productivity and suppressing generation of Haze to prevent turbidity of a product, and that since an enzyme activity of degrading a protein is lowered, foam quality of the fermented beverage obtained is improved, and a full-bodied taste is increased.

BRIEF DESCRIPTION OF THE DRAWINGS

[FIG. 1] FIG. 1 is a graph showing the progress of elongation of acrospires depending upon steeping conditions.

[FIG. 2] FIG. 2 is graphs showing differences in an amount of an enzyme for degrading cell walls depending upon steeping conditions.

[FIG. 3] FIG. 3 is graphs showing differences in an amount of an amylolytic enzyme depending upon steeping conditions.

[FIG. 4] FIG. 4 is a graph showing differences in an amount of a protease depending upon steeping conditions.

[FIG. 5] FIG. 5 is graphs showing differences in indices associated with cell wall degradation, indices associated with proteolysis and indices associated with amylolysis of malts, and an amount of β-glucan in a wort depending upon steeping conditions.

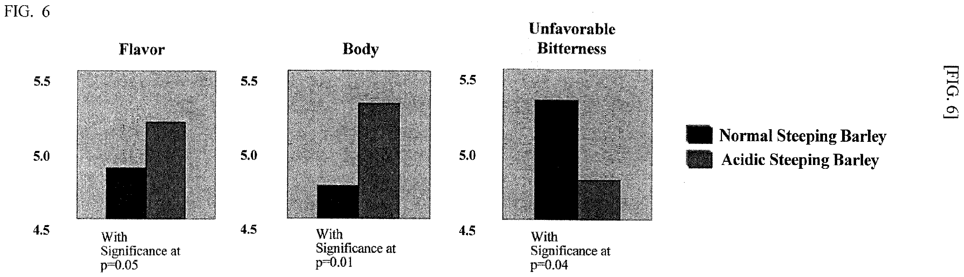

[FIG. 6] FIG. 6 is graphs showing differences in sensory evaluations of beers obtained depending upon steeping conditions.

[FIG. 7] FIG. 7 is a graph showing the relationship between a pH and an acrid component.

MODES FOR CARRYING OUT THE INVENTION

In general, in the production of malts, first, a series of processes including cleanly removing dust and dirt from raw material barley, allowing the barley to contain water in a steeping barley tank and thereafter to be properly germinated, and then kiln-drying the barley with hot air is carried out, to obtain malts having components essential for a beer-taste beverage, a distinctive color and a spicy aroma. On the other hand, as malts usable in the production of beer, malts in which degradation of cell walls is progressed to efficiently elute components in malts, or malts in which proteolysis is progressed to efficiently advance fermentation of a wort are likely to be favored. However, recently, it is pointed out that there is a disadvantage that over-progression of proteolysis makes malt-possible[*sic*] nitrogen and KI (Kohlbach: soluble nitrogen / total nitrogen × 100) too high, so that a novel countermeasure has been desired. In view of the above, the present inventors have studied on the steeping conditions, and, as a result, they have found that when barley is steeped in an acid aqueous solution containing phosphoric acid (steeping water) instead of water which has been usually used, respiration of barley is suppressed and the growth of cells is hebetated, and that the elongation of acrospires is slowed even when the barley is subjected to the subsequent germination step, and rooting is remarkably suppressed. On the other hand, they have also found that proteolysis is suppressed to some extent, while degrading cell walls to sufficiently distribute water to a central part of the cell. It is assumed that such phenomena are found as follows. When non-dissociating phosphoric acid is incorporated into cells, the phosphoric acid is dissociated according to liquid properties within the cell, a proton released is caused via ATP, thereby suppressing cellular activities, which in turn suppresses rooting or proteolysis. Therefore, a fermented beverage using malts obtained by steeping barley shows an excellent flavor with a rich taste, while suppressing acridity. However, these assumptions do not limit the present invention thereto. Here, materials with a potential to be usable for the making of liquor are handled as malts, regardless of the presence or absence of rooting.

In the method for producing malts of the present invention, first, steeping of barley is carried out by steeping barley in steeping water containing phosphoric acid (hereinafter, simply referred to as acidic steeping water). The steeping may be referred to as acidic steeping or acidic steeping barley. Here, barley subjected to steeping may be previously subjected to removal of dirt or the like, or subjected to sorting with a grain sorter or the like. It is preferable that barley used in the present invention has even and active germination strength, so that barley having a high germination ratio is preferably used. As the barley having a high germination ratio, barley having a germination ratio of 95% or more is preferably used, and barley having a germination ratio of 98% or more is more preferably used. It is preferable that barley in a dormant state having a germination ratio of less than 95% or old barley having a germination ratio lowered to less than 95% is not used. After harvesting the barley, the barley is dried and stored in a state in which a water content is generally 13% or so. Barley after maturation period is in a dormant period, and a dormant period is generally ended at from 90 to 100 days or so after the harvest, but there are some differences depending upon varieties or harvest years. When a storage period after the harvest is lengthened and the barley becomes old, a germination ratio tends to be lowered depending upon the storage environment (temperature or humidity), so that it is preferable to use barley which is preferably within 3 years, more preferably within 2 years, and even more preferably within 1 year after the harvest, from which the dormant period is ended. A method for evaluating a germination ratio in the present invention is a method including placing 100 grains of barley in a petri dish in which two sheets of filter papers are overlaid, adding 4.5 cc of water thereto, calculating a proportion of germinated grains at 20°C after 72 hours, and repeating this cycle three times to obtain a mean.

The acidic steeping water usable in the present invention is not particularly limited, so long as the acidic steeping water contains phosphoric acid, and, for example, a steeping water can be prepared by diluting phosphoric acid with water. In addition, the steeping water may contain a salt of phosphoric acid, and examples of the salt of phosphoric acid include calcium phosphate, barium phosphate, magnesium phosphate, sodium phosphate, potassium phosphate and the like. These salts can be used alone or in combination of two or more kinds. Here, the acidic steeping water usable in the present invention may contain other acids (for example, citric acid, or the like) within the scope not impairing the effects of the present invention. Therefore, a combination of phosphoric acid or a phosphate with other acids is also encompassed in the present invention.

The content of phosphoric acid ($H_3PO_4$) in the acidic steeping water is preferably 7 mM or more, more preferably 9 mM or more, even more preferably 11 mM or more, even more preferably 13 mM or more, even more preferably 15 mM or more, even more preferably 17 mM or more, even more preferably 19 mM or more, even more preferably 21 mM or more, even more preferably 23 mM or more, even more preferably 24 mM or more, even more preferably 25 mM or more, even more preferably 26 mM or more, even more preferably 27 mM or more, and even more preferably 28 mM or more, from the viewpoint of suppressing rooting. In addition, the content is preferably 176 mM or less, more preferably 125 mM or less, even more preferably 100 mM or less, even more preferably 80 mM or less, even more preferably 70 mM or less, even more preferably 60 mM or less, even more preferably 50 mM or less, even more preferably 40 mM or less, even more preferably 38 mM or less, even more preferably 36 mM or less, even more preferably 35 mM or less, even more preferably 34 mM or less, even more preferably 33 mM or less, and even more preferably 32 mM or less, from the viewpoint of hebetating cell growth. Here, the content of phosphoric acid as used herein can be measured in accordance with post-column pH buffered electric conductivity detection method (Shimadzu Corporation, Organic Acid Analysis System, Prominence).

The pH of the acidic steeping water (an initial pH to be subjected to steeping) is 1.6 or more, preferably 1.7 or more, more preferably 1.75 or more, even more preferably 1.80 or more, even more preferably 1.85 or more, even more preferably 1.90 or more, even more preferably 1.92 or more, even more preferably 1.94 or more, and even more preferably 1.96 or more, and 2.30 or less, preferably 2.25 or less, more preferably 2.20 or less, even more preferably 2.08 or less, even more preferably 2.06 or less, even more preferably 2.04 or less, even more preferably 2.02 or less, and even more preferably 2.00 or less. Accordingly, the range of the initial pH is from 1.6 to 2.3, preferably from 1.7 to 2.25, more preferably from 1.7 to 2.20, even more preferably from 1.7 to 2.08, even more preferably from 1.7 to 2.06, even more preferably from 1.7 to 2.04, even more preferably from 1.7 to 2.02, and even more preferably from 1.7 to 2.00. In addition, it is desired that a pH during steeping is controlled within the above range, and it is preferable that when a pH is increased during steeping, a pH is 3.4 or less, more preferably 3.2 or less, and even more preferably 3.0 or less at the time of termination of steeping. Here, steeping may be carried out in plural times such as a first steeping, a second steeping and a third steeping as described later, but an initial pH and a terminal pH of the acidic steeping water at that time mean pHs at the time of beginning and termination of each steeping. The pH of the acidic steeping water is measured at 20°C.

As an immersion tank (a steeping tank) in which acidic steeping water is placed, a known tank is used, and a tank made of stainless steel is preferred from the viewpoint of inhibiting corrosion. The shape or size thereof can be properly adjusted in accordance with the technical common knowledge of one of ordinary skill in the art. In addition, the tank may be a water tank equipped with temperature-controlling functions. The steeping is carried out by adding an acidic steeping water to a tank to a level that barley is sufficiently covered.

The steeping conditions are not particularly limited, and known conditions can be used. Specifically, draining of water (water cut-off) can be further carried out subsequent to the steeping. In addition, steeping and draining water (water cut-off) may be alternatingly carried out, and they may be repeatedly carried out, including, for example, a first steeping, a first water cut-off, a second steeping, a second water cut-off, a third steeping, a third water cut-off, and the like. Barley can be allowed to sufficiently contain water by repeatedly carrying out steeping and water cut-off.

The time of the steeping cannot be unconditionally set because the time depends upon the kinds or amounts of barley, or temperature of water used in steeping. For example, a case where steeping is carried out by alternatingly repeating steeping and water cut-off up to a second steeping (also referred to as two-time steeping) will be explained. The time of the first steeping is preferably 4 hours or more, more preferably 6 hours or more, even more preferably 8 hours or more, even more preferably 9 hours or more, and even more preferably 10 hours or more, from the viewpoint of water absorption. In addition, the time is preferably 32 hours or less, more preferably 30 hours or less, even more preferably 28 hours or less, even more preferably 27 hours or less, even more preferably 26 hours or less, even more preferably 25 hours or less, even more preferably 24 hours or less, even more preferably 23 hours or less, and even more preferably 22 hours or less, from the viewpoint of production efficiency. In addition, the steeping temperature is preferably 12°C or higher, more preferably 13°C or higher, even more preferably 14°C or higher, even more preferably 15°C or higher, and even more preferably 16°C or higher, from the viewpoint that the temperature of the acidic steeping water used is that of well water used. In addition, the steeping temperature is preferably 22°C or lower, more preferably 21°C or lower, even more preferably 20°C or lower, even more preferably 19°C or lower, and even more preferably 18°C or lower, from the viewpoint of using well water. Here, well water refers to natural water, and it is drawn groundwater but not surface water, so that usually the well water is not subjected to chlorine sterilization, adjustment of mineral components, or the like.

The time of water cut-off after the first steeping is preferably 1 hour or more, more preferably 2 hours or more, even more preferably 10 hours or more, and even more preferably 15 hours or more, from the viewpoint of diffusing water into barley. In addition, the time is preferably 24 hours or less, and more preferably 20 hours or less, from the viewpoint of productivity. In addition, as the temperature at the time of water cut-off, examples of the environmental temperature at which barley is placed is, but not particularly set, for example, from 10° to 25°C, and the temperature is preferably 20°C or lower in a case where the barley is germinated after the water cut-off. Here, the environmental temperature used herein means a surface temperature of barley layer.

The second steeping can be carried out by referring to a water content which is already absorbed in the barley, and the steeping time can be properly set. The steeping time is, for example, from 1 to 10 hours or so, and preferably 1 to 6 hours. Also, the steeping temperature is not particularly set, and the temperature may be same as the temperature of the first steeping, and a steeping temperature within the above temperature range is exemplified.

The second water cut-off can be carried out by referring to the first water cut-off, and the temperature and the time can be properly set.

In addition, a third or subsequent steeping and water cut-off can be carried out by taking the amount of water absorption before that point into consideration and referring to first steeping and water cut-off.

The water content of malt (malt steeping degree) after acidic steeping thus obtained is preferably 35% or more, more preferably 35.5% or more, even more preferably 36.0% or more, even more preferably 36.5% or more, and even more preferably 37.0% or more, from the viewpoint of germination. In addition, the water content is preferably 42% or less, more preferably 41.5% or less, even more preferably 41.0% or less, even more preferably 40.5% or less, and even more preferably 40.0% or less, from the viewpoint of suppressing rooting. Here, "%," used herein, which is a unit of steeping degree is "% by weight."

Next, the obtained acidic steeping barley is subjected to germination and kiln-drying in accordance with a method known in the art, to provide malts in the present invention. Here, the malts used herein may also be referred to as acidic steeping malts. The germination temperature is not particularly limited, and, for example, examples of the germination temperature is, for example, from 15° to 25°C, and the germination temperature is preferably 18°C or higher, more preferably 19°C or higher, and even more preferably 20°C or higher, and preferably 23°C or lower, and more preferably 21°C or lower. In addition, the malts may be maintained at the above temperature for 3 to 6 days. The acidic steeping malts obtained are suppressed in rooting, so that a roots-removal step can be simplified.

The malts obtained are suppressed in rooting by acidic steeping, so that, for example, as compared to malts which are germinated by steeping malts so as to have a steeping degree of from 35 to 42% by weight under the same conditions excepting that the steeping water is changed to water (hereinafter referred to as normal malts), the malts obtained by the present invention exhibit excellent effects that an amount of rooting of the malts is suppressed to preferably 40% by weight or less, more preferably 20% by weight or less, even more preferably 10% by weight or less, even more preferably 8% by weight or less, even more preferably 6% by weight or less, even more preferably 5% by weight or less, even more preferably 4% by weight or less, and even more preferably 3% by weight or less, when defining a rooting amount of normal malts as 100% by weight. Here, the rooting amount used herein means total weight of a root thrusting out of the surface of each grain in malts which are malted from 100 g of raw material barley.

In addition, the content of the acrid component in the acidic steeping malts obtained is, for example, lowered in a case of a pH of from 1.8 to 2.0 of the acidic steeping water, and the content is preferably 90% by weight or less, more preferably 80% by weight or less, even more preferably 75% by weight or less, even more preferably 70% by weight or less, even more preferably 60% by weight or less, and even more preferably 55% by weight or less, when defining the content of the acrid component in normal malts as 100% by weight. Here, the acrid component as used herein refers to a hordatine glycoside, and the content can be measured in accordance with a method set forth in the following Examples.

Furthermore, an amount of enzyme cannot be unconditionally determined depending upon varieties or areas of produce of barley, but the acidic steeping malts have a large content of $\beta$-glucanase as compared to normal malts. The content of $\beta$-1,3 glucanase in the acidic steeping malts is preferably 120% or more, and more preferably 150% or more, when defining content in the normal malts as 100%, and an upper limit is not particularly set. In addition, the content of $\beta$-1,4 glucanase is preferably 120% or more, and more preferably 150% or more, when defining content in the normal malts as 100%, and an upper limit is not particularly set. As described above, since the content of $\beta$-glucanase is large as compared to normal malts, it is suggested that cell walls are sufficiently degraded in the acidic steeping malts, thereby leading more efficient elution of malts components. In addition, the degraded cell walls (mainly, $\beta$-glucan) is disadvantageous material in the making of beer, and it makes filtration difficult due to an increased viscosity of a wort or beer and further becomes a cause of generating turbidity, so that it can be said that acidic steeping malts having a low $\beta$ glucan are ideal malts. The content of $\beta$-glucan in the acidic steeping malts is preferably 5,000 ppm or less, more preferably 4,000 ppm or less, even more preferably 3,000 ppm or less, even more preferably 2,000 ppm or less, even more preferably 1,800 ppm or less, even more preferably 1,600 ppm or less, even more preferably 1,400 ppm or less, even more preferably 1,200 ppm or less, and even more preferably 1,000 ppm or less. In the present invention, when an acidic steeping water has a pH of from 1.8 to 2.2, the content of $\beta$-glucan is lowered, so that it is more preferable. Here, as an index showing a cell walls-degradation degree, "cell walls-degradation ratio (Calcfluor modification)" or "modification" may be used herein. The cell walls-degradation ratio of steeping obtained by the present invention is preferably 80% or more, and more preferably 85% or more. The contents of $\beta$-glucanase and $\beta$-glucan can be measured herein in accordance with

methods set forth in the following Examples.

The content of $\alpha$ amylase in the acidic steeping malts shows a tendency to be lower than normal malts, because elongation of acrospires is suppressed. The content is preferably 90% or less, and more preferably 80% or less or so, when defining the content in normal malts as 100%, and a lower limit is not particularly set. On the other hand, the content of $\beta$-amylase in the acidic steeping malts shows a tendency to be higher than that of normal malts, and the content is preferably 110% or more, and more preferably 120% or more, when defining the content in normal malts as 100%, and an upper limit is not particularly set. As described above, even if $\alpha$-amylase is present in a small amount, the $\beta$-amylase is present in sufficient, so that an amount of enzymes needed for amylolysis is in a sufficient amount, and diastase strength of the acidic steeping malts showing amylolysis ability of malts is equal to or higher than that of the normal steeping malts. In addition, non-degraded dextrin may slightly remain due to a low content of $\alpha$-amylase, and the dextrin gives a rich taste to beer and positively functions for taste of beer (this is a hypothesis, but if it is beyond hypothesis, the scope of the protection is unaffected). Since malts obtained by subjecting barley to acidic steeping richly contain an amylolytic enzyme, particularly $\beta$-amylase, efficient saccharification is carried out during the preparation of a wort, and saccharides which would be converted to ethanol with an yeast during the fermentation can be sufficiently secured. The amylase content as used herein can be measured in accordance with a method set forth in the following Examples.

In addition, the content of the endoprotease in the acidic steeping malts shows a tendency to be lower than that of the normal malts, because elongation of acrospires is suppressed. The endoprotease content in the acidic steeping malts is preferably 90% or less, and more preferably 80% or less, when defining the content in normal malts as 100%, and a lower limit is not particularly set. Since medium- to high-molecular weight proteins are contained without being degraded during beer brewing to some extent due to a low content of endoprotease, the produced beer gives a rich taste and can provide a new flavor (this is a hypothesis, but if it is beyond hypothesis, the scope of the protection is unaffected). In addition, since proteolysis is suppressed, a beer having good foaming can be provided. The endoprotease content as used herein can be measured in accordance with a method set forth in the following Examples.

The fermented beverage can be prepared with malts obtained by the present invention by adding an yeast to a wort obtained from raw materials containing the malts to allow fermentation, and optionally removing the yeast with a filtration apparatus or the like. Accordingly, the present invention also provides a method for producing a fermented beverage characterized in that the method uses malts obtainable by the method of the present invention. Here, the term "fermented beverage" as used herein means a beverage which is fermented with an yeast or the like, and specifically includes, in addition to a beer mentioned below, for example, a beer-taste beverage, a whisky and the like.

A wort can be obtained by supplying raw materials in which secondary raw materials are added to the above malts to a mash kettle or a mash tun, optionally adding an enzyme such as, for example, β-glucanase to allow gelatinization or saccharification, then removing husks or the like by filtration, adding hops or the like to a filtered product, and boiling, and removing a solid content such as a coagulated protein in a clearing tank. As the raw materials, secondary raw materials such as other crops, starches and saccharides also can be used. In addition, as malts to be used, known malts other than malts obtained by the method of the present invention may be used in combination, and a proportion thereof can be properly adjusted.

Next, the fermented beverage is produced by adding an yeast to a wort obtained above to allow fermentation, and optionally removing the yeast with a filtration apparatus or the like. Here, the process can go through the steps of storage (stored liquor), filtration and container filling, and optionally sterilization. As the conditions for these saccharification step, filtration step, boiling step, solid content removing step, fermentation step, and the like, conditions that are generally known may be used.

Since the fermented beverage of the present invention thus obtained uses malts of acidic steeping, a bitter aftertaste based on acridity is suppressed, and proteins are contained to some extent without being degraded, thereby giving a feel of a rich taste, whereby a new flavor can be provided.

Furthermore, the malts obtained by the present invention provide a flavor mentioned above, so that foodstuff in which the malts are used as a raw material, for example, a malt-applicable beverage, a beer-taste beverage and the like can be provided in addition to the above fermented beverage. Accordingly, the present invention also provides a method for producing foodstuff, a method for producing a malt-applicable beverage, or a method for producing a beer-taste beverage, characterized in that the method uses the malts obtained by the method of the present invention as a raw material.

The foodstuff in the present invention include malt-applicable foods and the like, in addition to fermented beverages, malt-applicable beverages and beer-taste beverages. Here, the term "malt-applicable beverage" as used herein means a beverage in which at least malts are used as a raw material, and the malt-applicable beverage includes, for example, barley tea and a powder malt beverage. In addition, the term "beer-taste beverage" is a carbonated beverage having a beer-like flavor, and specific examples thereof include, for example, beers, *Happoushu* (low-malt beers), other miscellaneous liquors, liqueurs, non-alcoholic beverages and the like. These foodstuff are not particularly limited, so long as the malts obtained by the present invention are used as a raw material, and these foodstuff can be produced in accordance with known methods.

The present invention also provides a method for suppressing rooting of malts, characterized in that the method includes steeping barley in an acidic steeping water containing phosphoric acid. The malts obtained by steeping barley in the above acidic steeping water exhibit excellent effects such that rooting is suppressed as compared to malts obtained by steeping in water. Here, raw materials, steeping conditions and the like are as described in the sections of the method for producing malts of the present invention.

EXAMPLES

The present invention will be specifically described hereinbelow by the Examples, without intending to limit the scope of the present invention to the following Examples.

Test Example 1 - Elongation of Acrospires

Crops of Sachiho Golden (produce of Eastern Utsunomiya) harvested in the year 2014 (100% of germination ratio) were used as a domestic (Japan) two-row malting barley cultivar. As steeping conditions, the following programs (20°C) were performed.
Programs first steeping: 20 hours, first water cut-off: 10 hours, second steeping: 2 hours

A standard in which steeping of barley was carried out in pure water was defined as "normal steeping barley (Comparative Example 1)," and a standard in which steeping of barley was carried out in an aqueous solution of phosphoric acid at a pH of 2.0 was defined as "acidic steeping barley (Example 1)," and steeping (steeping and water cut-off) and germination were carried out. Here, the temperature of water used was 16.5°C. At that time, 100 grains of barley of which husks were made transparent by boiling barley at each step to easily observe malts were furnished, about 40 mL of 0.5% HiBlue AT (plant gardenia pigment + ethanol) were added thereto, and the mixture was boiled for about 10 minutes and allowed to cool for about 30 minutes. The solution remaining in a beaker was discarded, the beaker was washed with water two or three times, and thereafter the grains were spread onto a measurement plate. A ratio of the length of acrospires to the length of the grains (length of acrospires / length of grains) was calculated for each grain, and the number of grains belonging to each class was examined in accordance with the basis listed in the following Table 1. Thereafter, an average length of the acrospires was calculated based on the following formula:

$$\text{Average Length of Acrospires}$$

$$= \{[(a + b) \times 2] + (c \times 3) + (d \times 5) + (e \times 7) + (f \times 10)\} / 800$$

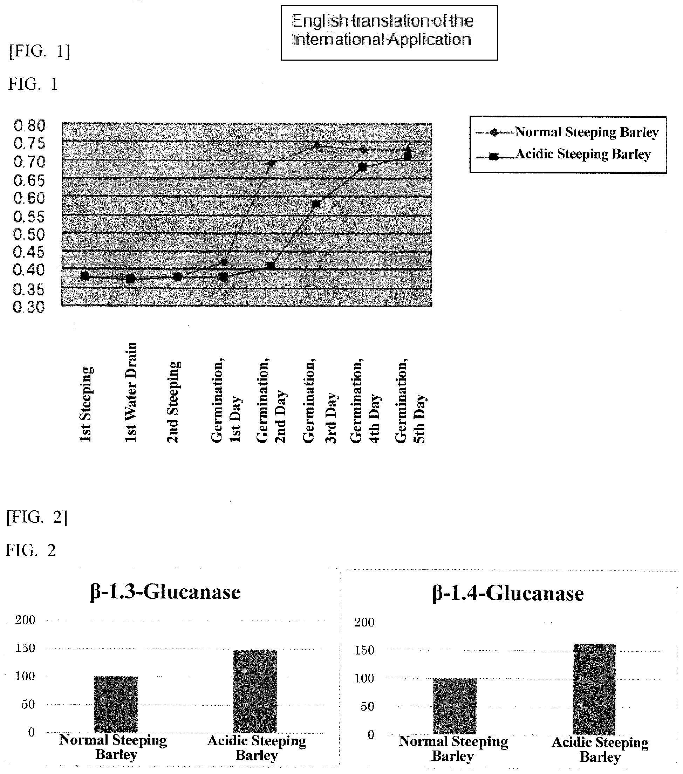

The results are shown in Table 2 and FIG. 1. Here, the measurement of the steeping degree was carried out after 20 hours passed from the termination of a final steeping step, and the steeping degrees were 40.8% in the normal steeping barley and 41.6% in the acidic steeping barley. In addition, the germination was maintained at 20°C for 5 days.
[Table 1]

Table 1

| Class | Length of Acrospires / Length of Grains |
|-------|------------------------------------------|
| a | 0 |
| b | Exceeding 0 and 1/4 or less |
| c | Exceeding 1/4 and 2/4 or less |
| d | Exceeding 2/4 and 3/4 or less |
| e | Exceeding 3/4 and 4/4 or less |
| f | Exceeding 4/4 |

[Table 2]

Table 2

| | State | Average Length of Acrospires | Number of Grains Belonging to Each Class | | | | | |
|---|---|---|---|---|---|---|---|---|
| | | | a | b | c | d | e | f |
| Normal Steeping Barley | 1st Steeping | 0.38 | 0 | 0 | 100 | 0 | 0 | 0 |
| | 1st Water Drain | 0.38 | 0 | 0 | 100 | 0 | 0 | 0 |
| | 2nd Steeping | 0.38 | 0 | 0 | 100 | 0 | 0 | 0 |
| | Germination, 1st Day | 0.42 | 0 | 0 | 82 | 18 | 0 | 0 |
| | Germination, 2nd Day | 0.69 | 0 | 0 | 12 | 52 | 36 | 0 |
| | Germination, 3rd Day | 0.74 | 0 | 0 | 1 | 57 | 39 | 3 |
| | Germination, 4th Day | 0.73 | 0 | 0 | 0 | 60 | 40 | 0 |
| | Germination, 5th Day | 0.73 | 0 | 0 | 0 | 58 | 42 | 0 |
| Acidic Steeping Barley | 1st Steeping | 0.38 | 0 | 0 | 100 | 0 | 0 | 0 |
| | 1st Water Drain | 0.37 | 0 | 1 | 99 | 0 | 0 | 0 |
| | 2nd Steeping | 0.38 | 0 | 0 | 100 | 0 | 0 | 0 |
| | Germination, 1st Day | 0.38 | 0 | 0 | 100 | 0 | 0 | 0 |
| | Germination, 2nd Day | 0.41 | 0 | 0 | 87 | 13 | 0 | 0 |
| | Germination, 3rd Day | 0.58 | 0 | 0 | 17 | 83 | 0 | 0 |
| | Germination, 4th Day | 0.68 | 0 | 0 | 0 | 77 | 23 | 0 |
| | Germination, 5th Day | 0.71 | 0 | 0 | 0 | 67 | 33 | 0 |

From Table 2 and FIG.1, the acidic steeping barley has a delayed elongation of acrospires as compared to the normal steeping barley. In other words, it is thought that elongation of acrospires within a predetermined germination time is shorter in the acidic steeping barley, as compared to the normal steeping barley, so that the amount of an acrid component produced together with acrospires is lower.

Test Example 2 - Amount of Enzyme

With respect to the malts of Comparative Example 1 and Example 1, each of amounts of a cell walls-degrading enzyme, an amylolytic enzyme and a proteolytic enzyme was measured, and also indices associated with cell wall degradation, indices associated with proteolysis, and indices associated with amylolysis were calculated. Here, an enzyme extraction from malts was carried out according to the following method.

< Enzyme Extraction Method >

One gram of malts which are previously cryo-milled with ShakeMaster manufactured by Medical Bio Science is suspended in 2 mL of a buffer suitable for the measurement of activities of various enzymes, extraction is carried out for 60 minutes in iced water, and the extracts are then subjected to ultracentrifugation treatment (1,000 g × 20 minutes), to provide the supernatant as an enzyme solution.
As to the cell walls-degrading enzyme, the measurements were carried out as follows. The results are shown in FIG. 2.

< Measurement of $\beta$-1,3-Glucanase Level >

According to a method of MaCleary and Shameer (1987) 1), azo-stained $\beta$-1.3 glucan is used as a substrate, enzyme extracts from malts are added thereto, and the mixture is reacted at 30°C for 10 minutes. A 2% Trizma Base Solution is added thereto to stop the reaction, $\beta$-1.3-glucan which remains undegraded is centrifuged to allow precipitation, and the supernatant is subjected to colorimetry at 590 nm (n = 5).

< Measurement of $\beta$-1,4-Glucanase Level >

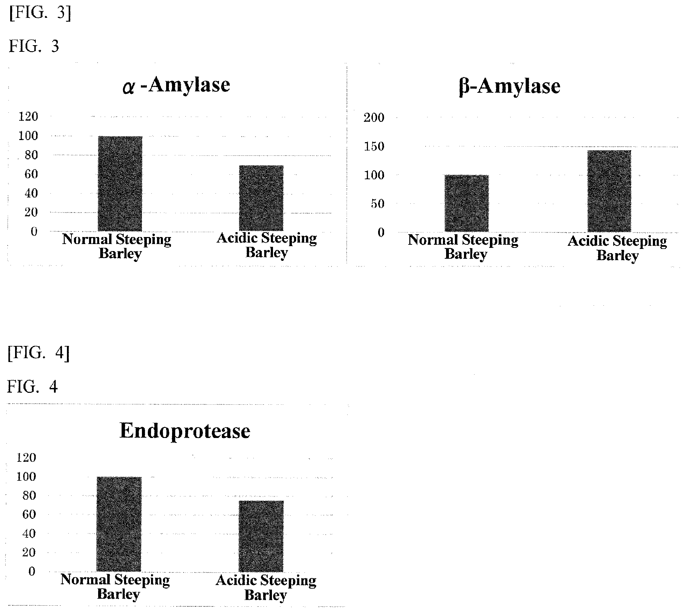

According to a method of MaCleary and Shameer (1987) 1), CM-Cellulose which is previously crosslinked with a blue pigment and azo-stained is used as a substrate, enzyme extracts from malts are added thereto, and the mixture is reacted at 40°C for 10 minutes. A substrate which remains undegraded is precipitated by adding precipitating agents (4% sodium acetate, 0.4% zinc acetate and 80% methyl cellosolve), and the supernatant is subjected to colorimetry at 590 nm (n = 5).
As to the amylolytic enzymes, the measurements were carried out as follows. The results are shown in FIG. 3.

< Measurement of $\alpha$-Amylase Level >

A crop $\alpha$ amylase kit from BIOCON is used. A blocked p-nitrophenyl maltoheptaoside (BPNPG7) is used as a substrate, enzyme extracts from malts are added thereto, and the mixture is reacted at 40°C for 20 minutes. The reaction is stopped with Trizma base, and p-nitrophenyl maltosaccharide produced is degraded with glucoamylase, $\alpha$-glucosidase. P-nitrophenol produced is subjected to phenolate color development, and the absorbance is measured at 410 nm (n = 5).

< Measurement of $\beta$-Amylase Level >

Enzyme extracts from malts are added to Betamyl (p-nitrophenyl maltotriose; PNP-$\beta$-G3) solution in which $\alpha$-glucosidase is present in a high level, the mixture is reacted at 40°C for 100 minutes, the reaction is stopped by adding Trizma base, the solution is subjected to color development, and the absorbance of p-nitrophenol dissociated from the substrate is measured at 400 nm (n = 5).
As to the proteolytic enzyme, the measurement was carried out as follows. The results are shown in FIG. 4.

< Measurement of Endoprotease Level >

Azo-stained casein is used as a substrate, enzyme extracts from malts are added thereto, and the mixture is reacted at 40°C for 30 minutes. The reaction is stopped with a TCA solution, the solution is allowed to stand for 5 minutes, the mixture is then subjected to centrifugation to precipitate an undegraded substrate, and the supernatant is subjected to colorimetry at 366 nm (n = 5). Here, an enzyme activity is defined such that an enzyme concentration of an enzyme liquid which is added to an enzyme reaction liquid to increase the absorbance by 1.0 is 1 U/mL. Preparation of Azocasein Substrate Solution:

The amount 0.6 g of Azocasein (Sigma, A-2765) is dissolved in a 50% uric acid solution, 50 mL of Milli-Q water is added thereto, and a liquid mixture is stirred until particles disappear. A pH of the solution is then adjusted to 8.5 with a diluted sulfuric acid, and a volume is filled up to 100 mL.

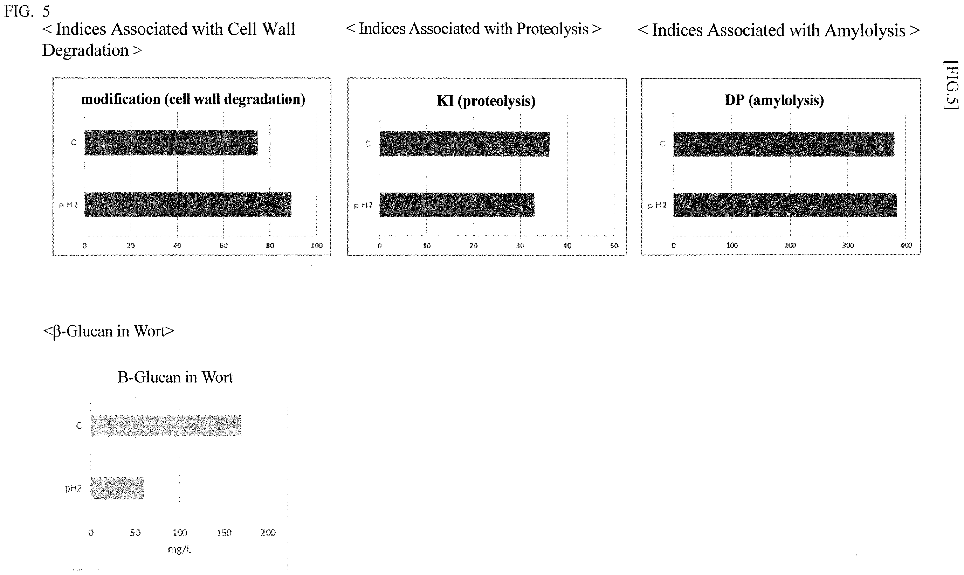

Indices associated with cell wall degradation, indices associated with proteolysis and indices associated with amylolysis are as follows. The results are shown in FIG. 5.

< Indices Associated with Cell Wall Degradation (Modification) >

How to Measure: Malts are immobilized to a clay plate and scraped with a file to a half size of the grain. A fluorescent reagent Calcofluor which bonds to β-glucan is applied to the scraped surface. Next, a color development aid Fast Green for staining non-denatured albumen is applied, and reactions are carried out under UV light and white light to develop color. Modification is a value obtained by defining an area not emitting light under UV light as the numerator over an area emitting green light under white light as the denominator.

< Indices Associated with Proteolysis (KI) >

Indices associated with proteolysis are obtained by a method prescribed in a standard method of the EBC (European Brewery Convention) (Analytica-EBC 1987).

< Indices Associated with Amylolysis >

How to Measure: Enzymes of malts are extracted with distilled water at 40°C. Starch in standard starch solution is hydrolyzed with the enzyme extracts from malts, and an amount of reduced saccharide produced is measured with an iodine solution. The measurement results are obtained by converting to maltose generated from 100 g of malts.

From FIGs. 2 to 5, acidic steeping malts have a larger amount of the cell walls-degrading enzyme as compared to the normal malts, and consequently, the cell wall degradation is progressed (see, a comparative graph of modification in FIG. 5), and β-glucan in a wort is reduced (see, a comparative graph of β-glucan in a wort in FIG. 5). Here, the amount of β-glucan in a wort is measured in accordance with a known technique (BCOJ (Brewery Convention of Japan), BCOJ-1998 <8.28> of Beer Analysis Method). In addition, α-amylase which is an amylolytic enzyme is reduced, whereas β-amylase is equal to or higher than that of normal malts, as a result, diastase strength which is a total strength thereof is nearly same level (see, a comparative graph of DP in FIG. 5). A proteolytic enzyme shows a tendency to be lowered, and consequently, proteolysis is suppressed (see, a comparative graph of KI in FIG. 5). It can be seen from these results that in a case where acidic steeping malts are used, an amount of β-glucan in a wort is lowered due to the increase of cell walls-degrading enzyme to decrease a loss of time and a loss of extract during a filtration step, thereby improving productivity. In addition, although malts containing a high content of β-glucan have been handled with a commercial enzyme (β-glucanase), the commercial enzyme would not be necessary, so that the costs therefor can be cut down, and also it is suggested that it contributes to prevention of a product from being turbid. On the other hand, it is anticipated that the lowering of an α-amylase level allows undegraded dextrin to properly remain to contribute to a rich taste of a beer, and that the lowering of the proteolytic enzyme allows medium- or high-molecular weight proteins to remain to contribute to improvement of a rich taste and foaming of a beer.

Test Example 3 - Amount of Rooting

Crops of Sukai Golden harvested in the year 2013 (99% of germination ratio) were used as domestic (Japan) two-row malting barley cultivar, and steeping conditions were the same as those in Test Example 1. A standard in which steeping of barley was carried out in pure water (pH 7.0) was defined as "normal steeping barley (Comparative Example 2)," and a standard in which steeping of barley was carried out in an aqueous solution having a pH listed in Table 3 with phosphoric acid was defined as "acidic steeping barley (Example 2)," and three batches of malts each of which was obtained by going through the steps of steeping, germination and kilning were prepared. For each of batches of the normal malts and the acidic steeping barley obtained, the weight of rooting was obtained, and an average length of acrospires and an yield were obtained in the same manner as Test Example 1 to calculate an average thereof. In addition, each of the contents of an acrid component and β-glucan was measured as follows, and the contents of enzymes were measured in the same manner as Test Example 2. The results are shown in Table 3. Here, the measurement of a malt steeping degree was carried out after 20 hours passed from the beginning of germination, and the measured values are shown in Table 3. In addition, the germination was carried out for 5 days while keeping a temperature at 20°C. In addition, an yield was calculated as X/100 (%) from X g of a weight of roots-removed malts obtained from 100 g of barley.

< Measurement of Acrid Components >

(Extraction Method)

The amount 5.0 g of malts which are previously cryo-milled with ShakeMaster manufactured by Medical Bio Science are suspended in 40 mL of hot water at 65°C, and extraction is carried out at 65°C for 1 hour. Thereafter, the extracts are subjected to centrifugation at 5,000 rpm for 20 minutes, and 10 mL of the supernatant is applied to PLS-2 solid phase column of GL Science (activated with methanol or the like), the column is washed with water, and thereafter fractions eluted with 20% ethanol are collected. The eluents are concentrated with SpeedVac, a concentrate is then freeze-dried, the freeze-dried product is dissolved in water, and the solution is subjected to LCMS under the following conditions, to obtain area of peak thereof.

(Analytical Conditions)

Apparatus: LCMS-2020 manufactured by Shimadzu Corporation
Column: Polar column (Develosil-C30-UG-5, $\varphi 2 \times 150$ mm)
Mobile phase: Gradient of water containing 0.1% formic
acid / acetocetonitrile[*sic*]

0 to 62.5 minutes (2→10% acetonitrile)
62.5 to 72.5 minutes (10% acetonitrile)

Flow rate: 0.2 mL/min
Column temperature: 40°C

| | | | |
|---|---|---|---|
| Ionization: | ESI (+) | 3.5 kV | 350°C |
| Monitor ion: | m/z | 438 (+) | acrid component 1 |
| | m/z | 357 (+) | acrid component 2 |
| | m/z | 372 (+) | acrid component 3 |

< Measurement of β-Glucan of Malts >

The measurements are carried out in accordance with a method of MaCleary and Glennie-Hlomes (1985) 3) and a method of MaCleary and Codd (1991) 2). Since malts richly contain free reduced saccharides, the procedures of adding a 50% ethanol to malt powders previously cryo-milled with ShakeMaster manufactured by Medical Bio Science, heating a mixture in a boiling water tank, thereafter discarding a supernatant, and removing reduced saccharides were repeated for plural times. A 20 mM sodium phosphate buffer (pH 6.5) and lichenase were added to the solution, β-glucan was degraded to an oligosaccharide, and β-glucosidase was further added thereto to degrade to glucose. The colorimetry was carried out at 590 nm.

Table 3

| | Initial pH | pH at Termination of First Steeping | mM | Malt Steeping Degree (%) | Amount of Rooting Based on 100 g of Barley (g) | Yield (%) | Length of Acrospires | Acrid Component (Based on Normal Steeping Barley, % by weight) | β-Glucan (ppm) | α-Amylase (Based on Normal Steeping Barley, %) | β-Amylase (Based on Normal Steeping Barley, %) | Endoprotease (Based on Normal Steeping Barley, %) |
|---|---|---|---|---|---|---|---|---|---|---|---|---|
| Water (Normal Steeping Barley) | 7.0 | 6.39 | - | 39.9 | 4.85 | 84.5 | 0.69 | 100 | 2,434 | 100 | 100 | 100 |
| Phosphoric Acid (Acidic Steeping Barley) | 1.5 | 1.34 | 223 | 35.8 | 0.03 | 91.8 | 0.38 | 259 | 1,239 | 21 | 187 | 16 |
| | 1.6 | 1.40 | 176 | 36.1 | 0.03 | 91.8 | 0.38 | 104 | 1,069 | 25 | 128 | 20 |
| | 1.8 | 1.69 | 82 | 36.8 | 0.05 | 91.2 | 0.38 | 53 | 622 | 39 | 557 | 45 |
| | 2.0 | 2.25 | 29 | 35.7 | 0.30 | 90.6 | 0.62 | 80 | 1,011 | 90 | 400 | 65 |
| | 2.2 | 2.90 | 18 | 36.7 | 1.51 | 89.0 | 0.63 | 116 | 974 | 90 | 370 | 68 |
| | 2.4 | 4.03 | 7 | 37.4 | 2.90 | 87.5 | 0.63 | 120 | 1,137 | 91 | 221 | 35 |

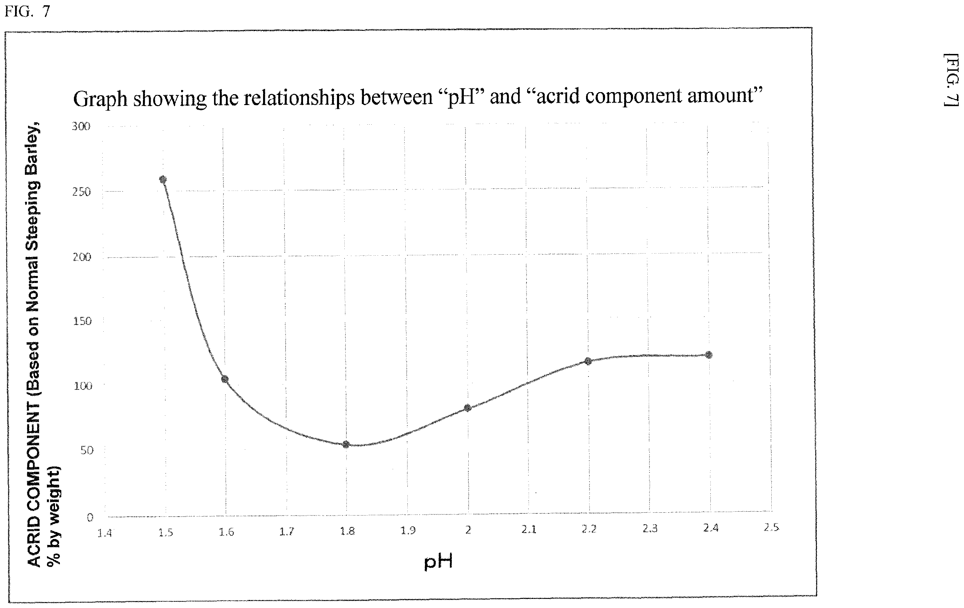

It could be seen from Table 3 that the acidic steeping malts clearly suppressed rooting, that β-glucan was also clearly lowered, and that an acrid component was also clearly lowered at a pH of from 1.8 to 2.0, as compared to the normal malts. The relationships between "pH" and "amount of an acrid component" are shown in FIG. 7 on the basis of Table 3, and it can be understood that when a value of an acrid component to the normal steeping barley is less than 100, an excellent flavor is achieved such that acridity is suppressed more than a conventional product. A range of "pH" realizing that is "from 1.62 to 2.08."

Test Example 4 - Properties of Fermented Beverages

Under the same steeping conditions as in Test Example 1, malts were prepared by defining a standard in which steeping of barley was carried out in well water as "normal steeping barley (Comparative Example 3)" and a standard in which steeping of barley was carried out in an aqueous solution having a pH of 2.0 with phosphoric acid as "acidic steeping barley (Example 3)." Thirty kilograms of the malts obtained were milled to a proper granularity, the milled malts were supplied to a mash tun, and 120 L of a hot water was then added thereto to produce mash at about 50°C. A part of mash was heated to 100°C to boil, and combined with the remaining mash, to carry out a saccharification at 60°C. A mash in which saccharification was completed was heated to 78°C, and transferred to a wort-filtration tank and filtered, to provide a filtrate.

A part of the filtrate obtained was taken, hops were added thereto, and a mixture was boiled for 80 minutes, to provide preparatory worts. These preparatory worts were added with top-fermenting beer yeasts and fermented under the identical conditions at about 20°C for about 10 days, to provide a stored beer.

Next, the stored beer was filtered without heat treatment, to remove the yeasts, and all-malt beers with 100% malts were produced. The following evaluations were made for the beers obtained. The results are shown in Table 4.

< Evaluation of Adherence of Foams >

A beer bottled into a large bottle is injected into a graduated cylinder (2-L graduated cylinder: inner diameter: 8.3 ± 0.2 cm, and height: about 45 cm) at once, and exactly after 30 minutes, an amount of foams adhering and remaining on the wall of the graduated cylinder is shown as a foam adhering area: T-SHV.
The amount of foams is obtained by taking a photograph of a foam adhering to an entirety of the graduated cylinder using a photosensitive paper, and contouring the part of foam transferred to the paper, to obtain an adherent area from the liquid surface with an areal measurement apparatus. All of the bottled beers and apparatuses usable in the measurement are maintained at 20°C from the previous day, and all the procedures mentioned above are carried out in a thermostatic room at 20°C. Five bottles of beers are measured per a sample, and an average of three bottles crossing off the maximum and the minimum is shown. Although the unit of adherence for foams (Schaumhaftvermogen) is $cm^2$, the unit is T-SHV without noting particularly.

< Evaluation of Permanent Turbidity >

P-Haze (permanent turbidity) of the beers obtained is measured according to the following method. When a beer would be deteriorated, the higher the value, the more likely turbidity is caused.

(Measurement Method)

A large bottle in which a sample beer is placed is stored and capped in a thermostatic water tank at 20°C for 1 hour. Thereafter, the bottle is gently shaken, and after having waited for disappearance of the foams, the beer is placed in a turbidimeter to measure the turbidity. The measurements are taken by orthogonally rotating a vessel in four directions, and obtaining an average thereof. Five vessels are used, and an average of five vessels is obtained. LabScat manufactured by SIGRIST is being used as a turbidimeter.

< Content of β-Glucan >

The content of β-glucan in the beer obtained is measured in accordance with a known technique (BCOJ-1998 <8.28>). The lower the β-glucan, the less likely the beer is caused to be turbid.

< Content of Undegraded High-Molecular Weight Saccharide >

The content of undegraded high-molecular weight saccharide in the beer obtained is measured in accordance with the following method.

- Subject a beer to a centrifugal treatment to allow degasification.
- Dispense 20 mL of ethanol to each of centrifuge tubes, add 5 mL of a sample thereto, and mechanically shake the mixture for 10 minutes.
- Subject the solution to a centrifugal treatment at 2,500 rpm for 5 minutes.
- Remove a liquid layer by decantation carefully not to allow the precipitates to flow out.
- Add 10 mL of a phosphate buffer to the precipitates, and mechanically shake the mixture for 10 minutes to dissolve.
- Subject the solution to a centrifugal treatment at 2,500 rpm for 5 minutes.
- Add 0.8 mL of the solution and 3.2 mL of a phosphate buffer to a cuvette with pipetman, stir the mixture well, and measure the absorbance at 578 nm using a phosphate buffer as a blank (Ez).
- Add 200 $\mu$L of a 0.02 N iodine solution with pipetman, stir well, and measure the absorbance at 578 nm after 30 seconds (Eh).
- Add 4.0 mL of a phosphate buffer to a cuvette, add 200 $\mu$L of a 0.02 N iodine solution thereto, stir the mixture well, and measure the absorbance at 578 nm (Ej).
- Measure an iodine value ($\Delta$E) according to the following formula:

$$\Delta E = (Eh - Ej - 0.952 \times Ez) \times 5 \times 4$$

Eh: absorbance of a sample
Ej: absorbance of an iodine solution
Ez: absorbance of centrifuged supernatant
0.952: a factor of change in volume
5: a dilution factor
4: an MEBAK conversion factor

[Table 4]

Table 4

|  | Normal Malts | Acidic Steeping Barley |
|---|---|---|
| Foam Adhesion Area (T-SHV, cm$^2$) | 125 | 135 |
| Permanent Turbidity (P-Haze, Helm) | 29.7 | 22.7 |
| $\beta$-Glucan Content (mg/L) | 134 | 89 |
| Undegraded High-Molecular Weight Saccharide Content ($\Delta$E) | 0.19 | 0.29 |

From Table 4, the produced beers have good foaming (high T-SHV ), and good turbidity stability due to a small amount of $\beta$-glucan (low P-Ha ze). In addition, it can be expected that the beers have a full-bodied taste d ue to a large amount of undegraded saccharide (high $\Delta$E).

Test Example 5 - Sensory Evaluation of Fermented Beverages

Flavor of the beers obtained in Test Example 4 was evaluated by a sensory test. Specifically, 24 well-trained sensory evaluators were asked to evaluate for the presence or absence of "flavor," "rich taste (body)" and "unfavorable bitterness" in a full mark of score 5. "Very strongly felt" was given score 5; "felt" was given score 4; "somewhat felt" was given score 3; "slightly felt" was given score 2; and "not felt" was given score 1, and an average of evaluated scores was calculated to conduct a significance test. The higher evaluated scores of "flavor" and "rich taste (body)," the more preferred, and the lower the evaluated scores of "bitter aftertaste," the more preferred. The results are shown in FIG. 5. Here, the "taste" used herein refers to a diversified complicated taste.

From FIG. 5, the beers with acidic steeping malts gave significantly higher evaluated scores of taste and body, and gave significantly lower evaluated scores of bitter aftertaste due to acridity, as compared to those of the beers with normal malts.

Specific compositions of foodstuff blended with the malts obtained by the method of the present invention are exemplified hereinbelow. The numerical value at right end of each blended example means % by mass of each component.

Example 1 < Beer-Taste Fermented Beverage with Malts in Low Used Proportion >

Twenty-one kilograms of the malts of the present invention and 19 kg of barley are milled to a proper granularity, the milled product is supplied into a mash tun, 100 L of hot water is added thereto, and the components are mixed. The temperature is kept at 50°C for 60 minutes, the mixture is then subjected to saccharification at 65°C, a mash in which saccharification is previously completed is heated to 77°C, transferred to a wort filtration tank and filtered, to provide a filtrate. About 80 g of hops are added to 100 L of the filtrate obtained, and the mixture is boiled at 100°C for 90 minute. Thereafter, precipitates in the mash are removed, the temperature is cooled to 10°C, and bottom-fermenting yeasts are inoculated to this cooled wort. The fermentation is carried out for 14 days, and yeasts, proteins and the like are removed by filtering a fermented liquid, to provide a beer-taste beverage with malts in a low used proportion.

Example 2 < Non-Alcoholic Beer-Taste Beverage >

Twenty kilograms of malts of the present invention which are previously milled to a proper granularity are supplied to a mash tun, and 120 L of a hot water is added thereto, to prepare a mash at about 50°C. After holding the mash at 50°C for 30 minutes, the temperature is gradually raised, and saccharification is carried out at a temperature of 65° to 72°C for 60 minutes. The mash in which the saccharification is previously completed is heated to 77°C, transferred to a wort filtration tank and filtered, to provide a filtrate. A part of the filtrate obtained is taken, and a hot water is added thereto, at which time a mixing proportion of the filtrate to the hot water is adjusted so that a total amount of the extract portion at the completion of boiling would be 0.1% by weight. The production scale is 100 L, and about 100 g of hops are added, and a mixture is boiled at 100°C for 80 minutes. The sediment is separated from the boiled liquid, the boiled liquid is cooled to about 2°C, and thereafter an antioxidant, a flavor, an acidulant, a sweetener, optionally a caramel pigment, or the like is each added in a proper amount, and a liquid mixture is stored for about 24 hours. During the storage, a carbon dioxide gas is added in a proper amount. Thereafter, the liquid mixture is subjected to steps of filtration, bottling in a vessel, and sterilization (heated at 65°C or higher for 10 minutes), to provide a non-alcoholic beer-taste beverage.

Example 3 < Malt-Applicable Food (Starch Syrup) >

Glutinous rice is immersed in water for 6 hours or more, and steamed (or cooked) for about 1 hour. The steam-finished glutinous rice is cooled to a proper temperature, and hot water is then added thereto in an amount of 1.5 times that of the glutinous rice. On the other hand, 50 to 70 g of the malts of the present invention are placed into a bag per one *goh* (about 180 ml) of glutinous rice, a warm water at 40°C in an amount of from 1.2 to 1.4 times that of glutinous rice is supplied to the bag, and the contents are kneaded, a white turbid liquid is added to a vessel in which the glutinous rice is placed, and the glutinous rice is allowed to stand at a temperature of from 40° to 50°C for about 8 hours together with malts supplied to the bag. Thereafter, the liquid is squeezed, and heated and boiled to an intended concentration, to provide a "malt starch syrup" for drinks or a "malt starch syrup" for storage. The starch syrup produced with the malts of the present invention shows mild and comfortable sweetness, but do not have uncomfortable taste or unpleasant odor.

Example 4 < Malt-Applicable Beverage (Malts Beverage) >

Two liters of a hot water is added to 500 g of the milled malts of the present invention, the mixture is held at 50°C for 1 to 2 hours, and the mixture is subjected to a proteolysis step. Thereafter, the temperature is raised to 65°C, the product is subjected to saccharification, and the temperature is further raised to 75°C, to provide a mash (*maische*). This mash is boiled, and a filtrate is obtained, and proper amounts of pure cocoa, skimmed milk and sugar are mixed therewith, to prepare a malt beverage. The malts beverage prepared with the malts of the present invention is highly nutritious, has a rich taste, and gives refreshing sweetness.

INDUSTRIAL APPLICABILITY

According to the method of the present invention, the rooting-suppressed malts can be efficiently produced, so that the productivity of malting (an yield of malting) can be improved. In addition, a fermented beverage using the malts obtained has an enhanced rich taste while lowering acridity, so that the beverage can provide a new taste as an luxury product.

**Claims**

1. A method for producing malts, comprising steeping barley in steeping water having a pH of from 1.6 to 2.3 comprising phosphoric acid.

2. The method according to claim 1, further comprising, subsequent to the steeping, water cut-off comprising draining water.

3. The method according to claim 2, wherein the steeping comprises an initial steeping (a first steeping) and a further steeping (a second steeping), wherein the second steeping is carried out subsequent to the water-cut off.

4. The method according to claim 3, wherein the time of the first steeping is from 4 to 32 hours.

5. The method according to claim 3 or 4, wherein the time of water cut-off is from 1 to 24 hours.

6. The method according to any one of claims 3 to 5, wherein the time of the second steeping is from 1 to 6 hours.

7. The method according to any one of claims 1 to 6, wherein a pH at the time of termination of steeping is 3.4 or less.

8. The method according to any one of claims 1 to 7, wherein the barley subjected to steeping is barley having a high germination ratio.

9. The method according to claim 8, the barley having a high germination ratio is barley having a germination ratio of 95% or more.

10. The method according to any one of claims 1 to 9, wherein the malts obtained have a malt steeping degree of from 35 to 42% by weight.

11. The method according to any one of claims 1 to 10, wherein the barley is steeped until a malt steeping degree reaches to from 35 to 42% by weight, and wherein an amount of rooting at that case is 40% by weight or less, based on an amount of rooting when barley is steeped in water.

12. A method for producing foodstuff, comprising using malts prepared by a method as defined in any one of claims 1 to 11 as a raw material.

13. A method for producing a malt-applicable beverage, comprising using malts prepared by a method as defined in any one of claims 1 to 11 as a raw material.

14. A method for producing a beer-taste beverage, comprising using malts prepared by a method as defined in any one of claims 1 to 11 as a raw material.

15. A method for producing a fermented beverage, comprising using malts prepared by a method as defined in any one of claims 1 to 11 as a raw material.

16. A liquid for steeping comprising phosphoric acid for suppressing rooting of malts.

17. Use of steeping water comprising phosphoric acid for suppressing rooting of malts.

18. A method for suppressing rooting of malts, **characterized by** steeping raw material barley in steeping water comprising phosphoric acid.

19. Malts without rooting, wherein the malts are a steeping-processed product of raw material barley in steeping water comprising phosphoric acid.

20. Rooting-suppressed malts, wherein the malts are a steeping-processed product of raw material barley in steeping water comprising phosphoric acid.

21. Germination-suppressed malts, wherein the malts are a steeping-processed product of raw material barley in steep-

EP 3 392 330 A1

ing water comprising phosphoric acid.

[FIG. 1]

FIG. 1

[FIG. 2]

FIG. 2

[FIG. 3]

FIG. 3

α -Amylase

β-Amylase

[FIG. 4]

FIG. 4

Endoprotease

[FIG.5]

FIG. 5

< Indices Associated with Cell Wall Degradation >

< Indices Associated with Proteolysis >

< Indices Associated with Amylolysis >

modification (cell wall degradation)

KI (proteolysis)

DP (amylolysis)

<β-Glucan in Wort>

B-Glucan in Wort

[FIG. 6]

FIG. 6

FIG. 7

[FIG. 7]

EP 3 392 330 A1

Graph showing the relationships between "pH" and "acrid component amount"

## INTERNATIONAL SEARCH REPORT

| | International application No. |
|---|---|
| | PCT/JP2016/087403 |

**A. CLASSIFICATION OF SUBJECT MATTER**
*C12C1/02*(2006.01)i

According to International Patent Classification (IPC) or to both national classification and IPC

**B. FIELDS SEARCHED**

Minimum documentation searched (classification system followed by classification symbols)
C12C1/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JMEDPlus/JST7580(JDreamIII),
CAplus/MEDLINE/EMBASE/BIOSIS/FSTA/WPIDS(STN)

**C. DOCUMENTS CONSIDERED TO BE RELEVANT**

| Category* | Citation of document, with indication, where appropriate, of the relevant passages | Relevant to claim No. |
|---|---|---|
| X | DORAN, P. J. and BRIGGS, D. E., The Use of Chemical Agents to overcome Dormancy in Malting Barley., J. Inst. Brew., 1993, Vol. 99, pp. 85-89, particularly, Table 1 | 1-9,12-15, 19-21 |
| Y | | 10-11 |
| X | JP 11-505119 A (Brasseries Kronenbourg BK S.A.), 18 May 1999 (18.05.1999), claims; page 5, line 26 to page 8, line 23 & WO 1996/036740 A1 & EP 743361 A1 & AU 5903496 A particularly, page 3, line 13 to page 6, line 38; claims | 16-21 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 February 2017 (07.02.17) | 21 February 2017 (21.02.17) |

| Name and mailing address of the ISA/ | Authorized officer |
|---|---|
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2016/087403

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2015-226490 A  (Suntory Holdings Ltd.), 17 December 2015 (17.12.2015), paragraphs [0021], [0028] (Family: none) | 10-11 |
| A | BROOKES, P. A., et al., The Steeping of Barley. A Review of the Metabolic Consequences of Water Uptake, and Their Practical Implications., J. Inst. Brew., 1976, Vol. 82, pp. 14-26 | 1-21 |
| A | US 4251630 A  (Kurth Malting Corp.), 17 February 1981 (17.02.1981), 5th column, 3rd paragraph (Family: none) | 1-21 |
| A | Hideo MIYACHI, Beer Jozo Gijutsu, 1st edition, Shokuhin Sangyo Shimbunsha Co., Ltd., 1999, '1.10. Omugi no Kyumin', '6.4.3.2.8. Tokushu na Seibaku Hoho' | 1-21 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI5328959 B

- JP 2012213373 A